Europäisches Patentamt

European Patent Office

Office européen des brevets

(19)

(11) Publication number: **0 371 522**
**A1**

# (12) EUROPEAN PATENT APPLICATION

(21) Application number: **89202601.4**

(22) Date of filing: **16.10.89**

(51) Int. Cl.5: **C08G 59/68, C09D 5/03, C09D 163/00**

(30) Priority: **20.10.88 NL 8802585**

(43) Date of publication of application:
**06.06.90 Bulletin 90/23**

(84) Designated Contracting States:
**AT BE CH DE ES FR GB GR IT LI NL SE**

(71) Applicant: **STAMICARBON B.V.**
**Mijnweg 1**
**NL-6167 AC Geleen(NL)**

(72) Inventor: **Wories, Herman Jelle**
**Aureliushof 101E**
**NL-6215 SL Maastricht(NL)**
Inventor: **van den Boom, Henricus Petrus**
**Antonius Johannes M.**
**Rudigerstraat 29**
**NL-5408 AA Uden(NL)**
Inventor: **van den Elshout, Wilhelmus**
**Henricus Hubertus A.**
**Walramstraat 128/18**
**NL-6131 BP Sittard(NL)**

(54) **Curing catalyst for use in powder coatings.**

(57) The invention relates to a curing catalyst based on a benzotriazole substituted on the aromatic ring. The substituted benzotriazole is substituted on the aromatic ring with 2-4 alkyl groups with 1-7 carbon atoms per alkyl group. The catalyst is used in powder coatings based on epoxy functional compounds.

EP 0 371 522 A1

## CURING CATALYST FOR USE IN POWDER COATINGS

The invention relates to a curing catalyst for use in powder coatings based on epoxy functional compounds, which catalyst is based on a benzotriazole substituted on the aromatic ring.

Such a catalyst for the reaction of an epoxy resin and a polyester is known from EP-B-125906, in which the benzotriazole may be substituted on the aromatic ring with a hydrogen atom or an alkyl group with 1-4 carbon atoms.

A disadvantage of the catalysts according to EP-B-125906 is that they result in powder coatings with insufficient impact strength.

The object of the invention is to provide a curing catalyst for use in powder coatings based on epoxy functional compounds that does not have said disadvantage.

The invention is characterized in that the substituted benzotriazole is substituted on the aromatic ring with 2-4 alkyl groups with 1-7, preferably 1-3, carbon atoms per alkyl group.

According to a preferred embodiment of the invention the substituted benzotriazole is 5,6-dimethylbenzotriazole and/or 4,5-dimethylbenzotriazole.

According to a further preferred embodiment of the invention the substituted benzotriazole is 5,6-dimethylbenzotriazole.

The substituents on the benzotriazole can, for instance, also form one or more rings jointly.

In the past decade the popularity of powder coatings has increased considerably owing to the environmental compatibility, ease of application and good quality of these coatings. In this respect coating systems based on polyesters occupy a prominent position. A distinction can be made here between a number of systems. One of these systems consists of, for instance, an acid polyester and trisglycidylisocyanurate (TGIC) in a weight ratio of 93:7 and is used if a good outdoor durability is required (for example wall cladding, garden furniture, bi-cycles). Another system consists of an acid polyester in combination with an epoxy resin based on bisphenol-A, and is suitable, on account of, among other things, discolouration in natural light (UV), for indoor use only (for example refrigerators). The curing takes place in these two systems by the carboxyl groups of the polyester reacting with the epoxide groups of the second component. This happens at high-temperatures (180-200°C) and mostly under the influence of catalysts.

The catalyst according to the invention is preferably suited for use in powder coatings based on epoxy compounds and acid-terminated polyester resins. At a temperature of about 110°C-130°C the acid-terminated polyester resins are mixed via, for instance, extrusion with a polyfunctional epoxide, pigments and other additives and after their electrostatic spraying they are cured at temperatures of between 160°C and 200°C under the influence of a catalyst. During the curing process the powder melts and must subsequently flow out to form a smooth, continuous coating film before the curing reaction is getting under way properly. The catalyst must guarantee rapid curing, but must be substantially inactive in the mixing of the polyester and the epoxy compound. After the preparation of the polyester at temperatures of about 250°C and after its subsequent cooling to 190°C-200°C, the curing catalyst according to the invention is added. The catalyst according to the invention can be added, however, also during the mixing of the polyester and the epoxy compound. The requirements which the catalyst must conform to, viz. substantially no reaction at temperatures of up to 120°C-130°C, but a quick reaction at temperatures in excess of 160°C, imply that the temperature dependence of the rate of reaction must be very great.

The catalyst according to the invention is preferably used in amounts of between 0.01% (wt) and 2.0% (wt) calculated on the polyester resin, preferably in amounts of between 0.1 and 1.0% (wt) calculated on the polyester resin.

Suitable polyesters can be obtained via customary preparation processes from by preference substantially aromatic polycarboxylic acids, such as phthalic acid, isophthalic acid, terephthalic acid, pyromellitic acid, trimellitic acid, 3,6-dichlorophthalic acid, tetrachlorophthalic acid, respectively, in so far as available, the anhydrides, acid chlorides or lower alkyl esters thereof. Usually the carboxylic acid component consists of at least 50% (wt), preferably at least 70 moles %, isophthalic acid and/or terephthalic acid.

Further, it are particularly aliphatic diols, such as ethylene glycol, propane-1,2-diol, propane-1,3-diol, butane-1,2-diol, butane-1,4-diol, butane-1,3-diol, 2,2-dimethylpropane-diol-1,3 (= neopentyl glycol), hexane-2,5-diol, hexane-1,6-diol, 2,2-[bis-(4-hydroxycyclohexyl)]-propane, 1,4-dimethylolcyclo-hexane, diethylene glycol, dipropylene glycol and 2,2-bis-[4-(2-hydroxylethoxy)]-phenylpropane and smaller amounts of polyols, such as glycerol, hexanetriol, pentaerythritol, sorbitol, trimethylol ethane, trimethylol propane and tris-(2-hydroxy)-isocyanurate that can be used. Also, instead of diols respectively polyols, epoxy compounds can be used. The alcohol component preferably contains at least 50 moles % neopentyl glycol and/or propylene glycol.

2

Besides, the polycarboxylic acids applied may be cycloaliphatic and/or acyclic polycarboxylic acids such as, for instance, tetrahydrophthalic acid, hexahydroendomethylenetetra-hydrophthalic acid, azelaic acid, sebacic acid, decane-dicarboxylic acid, dimeric fatty acid, adipic acid, succinic acid, maleic acid, in amounts of up to 30 moles % at most, preferably up to a maximum of 20 moles %, of the total amount of carboxylic acids. Hydroxycarboxylic acids and/or possibly lactones can be used also, for instance 12-hydroxystearic acid, ε-caprolactone, hydroxy-pivalic acid ester of neopentyl glycol. In minor amounts, monocarboxylic acids, such as benzoic acid, tert.-butylbenzoic acid, hexahydrobenzoic acid and saturated aliphatic monocarboxylic acids can be added also in the preparation.

Using processes known per se the polyesters are prepared by esterification or transesterification, possibly in the presence of customary catalysts such as, for instance, dibutyl tin oxide or tetrabutyltitanate, in which processes, owing to a suitable choice of the preparation conditions and of the COOH/OH ratio, end products are obtained the acid value of which is between 5 and 150.

The epoxy compound applied may, for instance, be triglycidyl isocyanurate or an allied heterocyclic triepoxy compound, such as methyl-substituted triglycidylisocyanurate or 1,2,4-triglycidyltriazolidine -3,5-dion or diglycidylterephthalate or diglycidylhexahydroterephthalate or an epoxy resin based on bisphenol A and epichlorohydrin. The amount of epoxy compound applied in the binding agent with the polyester resin depends on the acid value and on the epoxy equivalent weight of the epoxy compound which the polyester is combined with and is generally between 0.8 and 1.2-equivalent epoxy per equivalent carboxyl.

The catalyst according to the invention can be used also in powder coating systems on the basis of, for instance, acrylates, oxazolidones or polyurethanes with epoxy compounds or oxazolines.

In addition to its use in powder coating systems, the catalyst according to the invention can be used also in liquid coating systems on the basis of acid-terminated polyesters acrylates or oxazolidones with epoxy compounds.

Of course, to the coating systems all customary additives such as, for instance, pigments, fillers, levelling agents and stabilizers can be added. Suitable pigments are, for instance, inorganic pigments, such as titanium dioxide, zinc sulphide, iron oxide and chromium oxide, and organic pigments, such as azo compounds. Suitable fillers are, for instance, metal oxides, silicates, carbonates and sulphates.

The invention will be further elucidated by means of the following examples without, however, being limited thereto.

Example I

420 parts by weight of a carboxylic acid-terminated polyester (Uralac P 3500™; DSM Resins BV) with an acid value of 30 mg KOH/gramme was mixed in an extruder (Werner and Pfleiderer, ZSK 30) at 120°C with 180 parts by weight solid epoxy resin (Araldite GT 7004™, Ciba Geigy) with an epoxy equivalent of 725, with 400 parts titanium dioxide pigment (CL 310™, Kronos), with 9 parts by weight levelling agent (Resiflow PV-5, Worlie), with 4.5 parts by weight benzoin and 0.68 part by weight 5,6-dimethyl-benzotriazole. After cooling, the extrudate was reduced in size, pulverized and screened to a particle size of 90 m. The resulting powder was applied electrostatically on Bonderized sheets with a coating thickness (after curing) of 50-60 m. Subsequently, the powder ooatings were cured for 20 minutes at 200°C.

Comparative Example A

Example I was repeated, the difference being that 0.55 part by weight benzotriazole, instead of 0.68 part by weight 5,6-dimethylbenzotriazole, was added as catalyst.

Comparative Example B

Example I was repeated, the difference being that 0.64 part by weight tolyltriazole, instead of 0.68 part by weight 5,6-dimethylbenzotriazole, was added as catalyst.

Example II

Example I was repeated, the difference being that 2,1 parts by weight 5,6-dimethylbenzotriazole, instead of 0.68 part by weight 5,6-dimethylbenzotriazole, were added. The powder coatings were cured for 10 minutes at 200¤C.

## Comparative Example C

Comparative example A was repeated, the difference being that 2.1 parts by weight benzotriazole, instead of 0.55 part by weight benzotriazole, were added. The powder coatings were cured for 10 minutes at 200¤C.

## Comparative Example D

Comparative example C was repeated, the difference being that 2.1 parts by weight tolyltriazole, instead of 0.64 part by weight tolyltriazole, were added. The powder coatings were cured for 10 minutes at 200¤C.

## Example III

Of the coatings obtained according to Examples I-II and Com parative Examples A-D the reverse impact (ASTM-D-2794-69) and the gloss according to Gardner (angles 20¤ and 60¤, ASTM-D-523-67) were determined, while the surface was judged visually. The results are shown in Tables I and II.

TABLE I

| Coating as per example | Reverse impact | Gloss | | Surface flow |
|---|---|---|---|---|
| | 20 minutes | 20¤ | 60¤ | |
| I | G[1] | 76 | 88 | 1[3] |
| A | 0[2] | 68 | 88 | 1 |
| B | 0 | 75 | 86 | 2 |
| where: | | | | |

1) G = good
2) 0 = insufficient
3) 1 = very good

4

TABLE II

| Coating as per example | Reverse impact | Gloss | | Surface flow |
|---|---|---|---|---|
| | 10 minutes | 20¤ | 60¤ | |
| II | G[1] | 67 | 82 | 2[4] |
| C | 0[2] | 79 | 87 | 2 |
| D | 0 | 64 | 86 | 2 |
| where: | | | | |

1) G = good
2) 0 = insufficient
4) 2 = good

**Claims**

1. Curing catalyst based on a benzotriazole substituted on the aromatic ring for use in powder coatings based on epoxy functional compounds, characterized in that the substituted benzotriazole is substituted on the aromatic ring with 2-4 alkyl groups with 1-7 carbon atoms per alkyl group.

2. Catalyst according to claim 1, characterized in that the substituted benzotriazole is substituted on the aromatic ring with 2-4 alkyl groups with 1-3 carbon atoms per alkyl group.

3. Catalyst according to any one of claims 1-2, characterized in that the substituted benzotriazole is 5,6-dimethylbenzotriazole and/or 4,5-dimethylbenzotriazole.

4. Catalyst according to claim 3, characterized in that the substituted benzotriazole is 5,6-dimethylbenzotriazole.

5. Powder coating based on a curing catalyst according to any one of claims 1-4.

6. Process for preparing powder coatings based on epoxy compounds in which the curing catalyst applied is a benzotriazole substituted on the aromatic ring, characterized in that, the substituted benzotriazole is substituted on the aromatic ring with 2-4 alkyl groups with 1-7 carbon atoms per alkyl group.

7. Process according to claim 6, characterized in that the substituted benzotriazole is 5,6-dimethylbenzotriazole and/or 4,5 dimethylbenzotriazole.

8. Process according to claim 7, characterized in that the substituted benzotriazole is 5,6-dimethylbenzotriazole.

9. Wholly or partly coated substrate, characterized in that the coating material applied is a powder coating according to claim 5 or a powder coating obtained according to any one of claims 6-8.

10. Application of a substituted benzotriazole substituted on the aromatic ring with 2-4 alkyl groups with 1-7 carbon atoms per alkyl group as curing catalyst in powder coatings.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 415 629 (A.J. PALUMBO et al.) * Claims; column 1, lines 57-67; column 2, lines 8-10 * | 1-10 | C 08 G 59/68 C 09 D 5/03 C 09 D 163/00 |
| X | PATENT ABSTRACTS OF JAPAN, vol. 5, no. 35 (C-46) [707], 5th March 1981; & JP-A-55 161 870 (TOSHIBA CHEMICAL K.K.), 16-12-80 * The whole abstract * | 1-10 | |
| X | PATENT ABSTRACTS OF JAPAN, vol. 12, no. 5 (C-467) [2852], 8th January 1988; & JP-A-62 161 820 (HITACHI CHEM. CO., LTD), 17-07-1987 * The whole abstract * | 1-10 | |

TECHNICAL FIELDS
SEARCHED (Int. Cl.5)

C 08 G
C 08 K

The present search report has been drawn up for all claims

| Place of search | Date of completion of the search | Examiner |
|---|---|---|
| THE HAGUE | 12-02-1990 | DERAEDT G. |